(19) Europäisches Patentamt
European Patent Office
Office européen des brevets

(11) **EP 3 339 255 B1**

(12) **EUROPÄISCHE PATENTSCHRIFT**

(45) Veröffentlichungstag und Bekanntmachung des Hinweises auf die Patenterteilung:
**12.02.2020  Patentblatt 2020/07**

(51) Int Cl.:
*C03B 5/237* *(2006.01)*     *F27D 17/00* *(2006.01)*

(21) Anmeldenummer: **17209616.6**

(22) Anmeldetag: **21.12.2017**

(54) **VERFAHREN ZUM BETREIBEN EINER GLASSCHMELZANLAGE SOWIE GLASSCHMELZANLAGE**

GLASS MELTING UNIT AND METHOD FOR OPERATING A GLASS MELTING UNIT

PROCÉDÉ DE FONCTIONNEMENT D'UNE INSTALLATION DE FUSION DE VERRE ET INSTALLATION DE FUSION DE VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2016  DE 102016125210**

(43) Veröffentlichungstag der Anmeldung:
**27.06.2018  Patentblatt 2018/26**

(73) Patentinhaber: **Beteiligungen Sorg GmbH & Co. KG**
**97816 Lohr am Main (DE)**

(72) Erfinder:
• **Breitfelder, Dipl.-Ing. Thomas**
**97816 Lohr am Main (DE)**
• **Wagner, Manfred**
**97816 Lohr am Main (DE)**
• **Lindig, Dr. Matthias**
**55218 Ingelheim (DE)**

(74) Vertreter: **Keil & Schaafhausen**
**Patent- und Rechtsanwälte PartGmbB**
**Friedrichstraße 2-6**
**60323 Frankfurt am Main (DE)**

(56) Entgegenhaltungen:
EP-A1- 0 599 548          WO-A1-2016/193608
US-A- 4 347 072          US-A- 5 203 859
US-A- 5 417 731          US-A- 5 893 940
US-A- 5 993 203          US-A1- 2002 152 770
US-A1- 2006 057 517

• DATABASE WPI Week 198740 1. Dezember 1980 (1980-12-01) Thomson Scientific, London, GB; AN 1987-282399 XP002780414, -& JP S55 154327 A (AGENCY OF IND SCI & TECHNOLOGY) 10. September 1987 (1987-09-10)

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben einer Glasschmelzanlage, vorzugsweise vom Typ einer U-Flammenwanne oder einer Querbrennerwanne, in der Glas, beispielsweise zur Herstellung von Behälterglas, geschmolzen wird. Es wird ferner auch eine derartige Glasschmelzanlage beschrieben.

Eine Glasschmelzanlage vom Typ U-Flammenwanne oder Querbrennerwanne besitzt einen Brennraum, in dem zur Beheizung die Verbrennung eines Brennstoffs mit einem Oxidanten stattfindet. Unterhalb des Brennraums ist typischerweise ein Schmelzbecken angeordnet, das die aufzuheizende Glasschmelze beziehungsweise das zum Einschmelzen vorgesehene Schmelzgut beinhaltet. Der Brennraum wird daher nach unten durch die Glasschmelze und/oder das Schmelzgut im Schmelzbecken abgeschlossen. Die bei der Verbrennung erzeugte Wärme wird hauptsächlich mittels Strahlung auf die Glasschmelze und/oder das Schmelzgut übertragen, wobei das Schmelzgut aus primären Rohstoffen und gegebenenfalls aus Glasscherben bestehen kann. Im Bereich des Endes des Durchflusswegs der Glasschmelze durch die Glasschmelzanlage wird das geschmolzene und auf eine vorgegebene Temperatur erwärmte Glas durch einen Auslass aus der Glasschmelzanlage zur weiteren Verarbeitung abgeleitet.

Der Brennraum einer bekannten U-Flammenwanne ist üblicherweise im Bereich des Anfangs des Durchflusswegs der Glasschmelze durch die Glasschmelzanlage mit zwei Brennerports verbunden, die zur Beheizung der Glasschmelzanlage und Abführung des Abgases im Wechsel in einem Brennmodus und einem Abzugsmodus betrieben werden. Dabei mündet jeder Brennerport durch eine Öffnung in einer Wand, beispielsweise einer Stirnwand des Brennraums, in den Brennraum und weist einen Kanal zur Zuführung des Oxidant und zur Abführung des Verbrennungsabgases sowie eine Brennerdüse zur Zuführung des Brennstoffs auf. Der Kanal des jeweiligen Brennerports wird seitlich durch eine Seitenwand begrenzt. Bei Querbrennerwannen sind die Brennerports seitlich an dem Brennraum an einer Wand (Seitenwand) angeordnet, die parallel zum Durchflussweg der Glasschmelze durch die Glasschmelzanlage verläuft. Auch die Seitenwand des Kanals des Brennerports verläuft parallel oder gegebenenfalls gerinfügig schräg zum Durchflussweg der Glasschmelze durch die Glasschmelzanlage.

Im Brennmodus eines Brennerports wird dem Brennraum durch die Brennerdüse des jeweiligen Brennerports der Brennstoff und durch den Kanal des jeweiligen Brennerports der Oxidant zugeführt. Als Brennstoff kann beispielsweise Erdgas eingesetzt werden, dessen Zusammensetzung je nach Lagerstätte variieren kann. Während russisches Erdgas größtenteils aus Methan besteht, weist Hollandgas auch einen etwa 10%-igen Anteil an Ethan auf. In Verbund Erdgas Nord ist hingegen ein etwa zehnprozentiger Anteil an $N_2$ enthalten. Alternativ kann auch Heizöl als Brennstoff eingesetzt werden, dessen Dichte, Asche- und Schwefelanteil sowie das Verhältnis von Kohlenstoff zu Wasserstoff je nach Heizölqualität von "Extra Leicht" bis "Schwer" variiert. Beispiele für Zusammensetzungen und Eigenschaften lassen sich den nachfolgenden Tabellen entnehmen.

Erdgas:

| Gasgruppe | | | H | | L | |
|---|---|---|---|---|---|---|
| Benennung | | | Hollandgas | Russisches Erdgas | Verbund Erdgas Nord I | Verbund Erdgas Nord II |
| $CO_2$ | Vol% | | 1,59 | 0,06 | 1,41 | 0,99 |
| $N_2$ | Vol% | | 0,86 | 0,81 | 10,22 | 12,01 |
| $CH_4$ | Vol% | | 84,84 | 98,37 | 83,77 | 84,91 |
| $C_2H_6$ | Vol% | | 9,23 | 0,51 | 2,51 | 1,75 |
| $C_2H_8$ | Vol% | | 2,62 | 0,17 | 0,73 | 0,16 |
| $C_4H_{10}$ | Vol% | | 0,69 | 0,06 | 0,24 | 0,15 |
| $C_5H_{12}$ | Vol% | | 0,13 | 0,02 | 0,07 | 0,02 |
| Brennwert Ho | kWh/m$^3$ | | 11,54 | 10,37 | 9,49 | 9,17 |
| Heizwert Hu | kWh/m$^3$ | | 10,52 | 9,42 | 8,63 | 8,33 |
| rel. Dichte kg/m$^3$ | kg/m$^3$ | | 0,8113 | 0,689 | 0,785 | 0,769 |
| Oberer Wobbeindex | kWh/m$^3$ | | 14,18 | 13,82 | 11,85 | 11,56 |

(fortgesetzt)

| Gasgruppe | | H | | L | |
|---|---|---|---|---|---|
| Benennung | | Hollandgas | Russisches Erdgas | Verbund Erdgas Nord I | Verbund Erdgas Nord II |
| Unterer Wobbeindex | kWh/m$^3$ | 12,93 | 12,55 | 10,78 | 10,51 |

Heizöl

| Heizölgruppen | | | Heizöl EL | Heizöl S |
|---|---|---|---|---|
| Kohlenstoff C | | Massen-% | 86,3 | 85-87 |
| Wasserstoff H | | Massen-% | 13,4 | 10,5-11,9 |
| Schwefel S | | Massen-% | 0,24 | 1,8-2,7 |
| $N_2$, $O_2$ | | Massen-% | 0,3 | 0,5 |
| Dichte | | g/ml | 0,86 | 0,94 |
| Heizwert Hu | | kWh/kg min. | 11,7 | 11,0 |
| Kinematische Viskosität *) bei 20° | | Stokes | 0,04 - 0,06 | |
| Kinematische Viskosität *) bei 100° | | | | 0,2-0,5 |
| Schwefelanteil max. | | Massen-% | 0,3 | <2,8 |
| Wassergehalt max. | | Massen-% | 0,05 | <0,5 |
| Gehalt an Sedimenten | | Massen-% | <0,05 | <0,5 |
| *) 1 Stokes = 1cm2/s = 100°E (Englergrad) | | | | |

Als Oxidant wird typischerweise Umgebungsluft verwendet. In dem sich an die Brennerports anschließenden Brennraum findet die Verbrennung des über den im Brennmodus befindlichen Brennerport zugeführten Brennstoffs mit dem zugeführten Oxidant statt. Das dabei entstehende Verbrennungsabgas nimmt bei einer U-Flammenwanne im Brennraum einen in etwa U-förmigen Weg und wird aus dem Brennraum durch den Kanal des im Abzugsmodus betriebenen Brennerports abgezogen. Hierbei strömt das Abgas in Richtung des Brennerports, der im Abzugsmodus betrieben wird. Bei Querbrennerwannen, bei denen die Brennerports an den Seitenwänden des Brennraums angeordnet sind, werden die Verbrennungsgase entsprechend an dem jeweils gegenüberliegenden Brennerport abgezogen.

Als aktive Unterstützung zum Abziehen der Abgase aus dem Brennraum kann ein Saugzug vorgesehen sein. Dazu kann jeder Brennerport beispielsweise mit einem Ventilator ausgestattet sein, der im Abzugsmodus die Verbrennungsgase aus dem Brennraum saugt. Normalerweise würde die Glasschmelzanlage durch eine entsprechende Kaminhöhe ohne eine solche aktive Unterstützung auskommen. Da jedoch typischerweise hinter der Glasschmelzanlage eine Filteranlage vorgesehen ist, muss gegebenenfalls durch den Saugzug der zusätzliche Widerstand dieser Filteranlage überwunden werden.

Bei dem beschriebenen Wechselbetrieb sind zumindest ein Brennerport im Brennmodus und ein weiterer Brennerport im Abzugsmodus, wobei es auch zu geringfügigen zeitlichen Überschneidungen kommen kann, sodass zwei Brennerports kurzzeitig im Brennmodus und/oder im Abzugsmodus sind. Nach etwa 20 bis 30 Minuten wird typischerweise der Modus der Brennerports gewechselt, wobei ein Brennerport im Abzugsmodus auf den Brennmodus wechselt und ein Brennerport im Brennmodus auf den Abzugsmodus wechselt. Je nach Ausführung der Glasschmelzanlage sind auch kürzere oder längere Perioden möglich.

Bei industriellen Feuerungsanlagen, zu denen auch Glasschmelzanlagen gehören, ist in jüngster Zeit neben der Problematik der Kohlendioxid- und Kohlenmonoxid-Emission auch die Stickoxid-Emission ins Zentrum öffentlichen Interesses gerückt. Stickoxide in der Atemluft können zu Reizungen und Schädigung der Atmungsorgane führen. Darüber hinaus sind diese maßgeblich für die Entstehung des sogenannten sauren Regens verantwortlich und sind klimawirksam, da diese zur Erderwärmung beitragen.

Stickoxide bzw. Stickstoffoxide sind eine Sammelbezeichnung für die gasförmigen Oxide des Stickstoffs. Sie

werden auch mit $NO_x$ abgekürzt, da es aufgrund der vielen Oxidationsstufen des Stickstoffs viele verschiedene Stickstoff/Sauerstoff-Verbindungen gibt. Außerdem wird die Abkürzung $NO_x$ auch synonym für giftige nitrose Gase verwendet, welche hauptsächlich bei der Verbrennung fossiler Brennstoffe entstehen. Im Folgenden werden diese Stoffe allgemein als Stickoxide bezeichnet. Sämtliche Stickoxide sind endotherme Verbindungen, die lediglich unter äußerem Zwang durch Energiezufuhr gebildet werden. Die Stickoxide werden in der Regel entsprechend ihrer Quellen und ihres Bildungsmechanismus in drei Arten unterteilt: thermisches $NO_x$, Brennstoff-$NO_x$ und promptes $NO_x$. Das Brennstoff-$NO_x$ spielt bei der Verbrennung von Erdgas, das in Glasschmelzanlagen verwendet wird, keine Rolle. Brennstoff-NOx kann jedoch bei einem organischen Brennstoff-Anteil, der N2 enthält, gebildet werden. Das prompte $NO_x$ entsteht über Kohlenwasserstoffradikale und Stickstoff unter reduzierenden Bedingungen. Bei Glasschmelzanlagen hat aufgrund der hohen Temperatur der Flamme das thermische $NO_x$ den größten Anteil. Bei der Feuerung von Glasschmelzanlagen enthält die Stickoxid-Zusammensetzung in der Regel etwa 95 % Stickstoffmonoxid (NO) und etwa 5 % Stickstoffdioxid ($NO_2$).

Die Änderung der Konzentration der Stickoxide lässt sich mit Hilfe der Reaktionskinetik beschreiben, welche maßgeblich durch die Konzentrationen von $N_2$ und $O_2$ und die Temperatur bestimmt wird. Die Stickoxidbildung steht dabei mit der Temperatur in einem exponentiellen Zusammenhang. Das bedeutet, dass mit zunehmender Flammentemperatur der Anteil des gebildeten Stickoxids exponentiell ansteigt.

Zur Minderung der Stickoxid-Emission, insbesondere auch zur Einhaltung der gesetzlichen Grenzwerte, sind bei der industriellen Feuerung vielerlei Maßnahmen bekannt. Grundsätzlich führt ein überstöchiometrisches Angebot an dem Oxidant Sauerstoff zu einer erhöhten Stickoxidproduktion und ist somit zu vermeiden. Aufgrund des exponentiellen Temperaturzusammenhangs ist es ebenfalls bekannt, die Flammenkerntemperatur durch verzögerte oder gestufte Verbrennung zu reduzieren, um die Stickoxidproduktion zu minimieren. Dabei werden Brennstoff und Oxidant nicht direkt zusammengeführt, sondern der Brennstoff wird dem Brennraum einseitig konzentriert und daher asymmetrisch zum Strom des Oxidanten zugeführt. Dies kann beispielsweise dadurch erreicht werden, dass eine Brennerdüse zur Zuführung von Brennstoff asymmetrisch zu einem Kanal zur Zufuhr des Oxidanten angeordnet ist. Bei vorhandener symmetrischer Anordnung mehrerer Brennerdüsen kann eine Brennerdüse außer Betrieb gesetzt werden, um faktisch eine asymmetrische Anordnung zu erhalten. Dies bewirkt eine verzögerte Vermischung von Brennstoff und Oxidant, wodurch die Temperatur der Flamme sinkt und somit die Bildung von thermischem $NO_x$ erschwert. Eine derartige gestufte Verbrennung ist aus den Dokumenten US 5,203,859, EP 0 599 548 A1, US 2006/0057517 A1, US 5,417,731 und US 5,993,203 bekannt.

Außerdem werden, beispielsweise in der Druckschrift US 5,893,940, bereits Sekundärmaßnahmen angewendet, die Stickoxide durch katalytische und nichtkatalytische Reduktion, beispielsweise durch die Reaktion mit Ammoniak oder Harnstoff, im Abgasstrom abbauen.

Aus der Druckschrift EP 2 332 889 A1 ist ein Schmelzofen bekannt, bei dem zusätzlich zu dem über eine Brenneranordnung zugeführten Brennstoff und Oxidant durch eine oder mehrere zusätzliche, in einer der Seitenwände angebrachte Strömungsgasdüsen ein Strömungsgas mit einer Mindestgeschwindigkeit von wenigstens 50 m/s dem Brennraum zugeführt wird. Durch die Strömung des zusätzlichen Gases nimmt das Strömungsgas Abgas mit und führt es dem Flammenbereich zu. Hierbei sind die Strömungsgasdüsen so ausgerichtet, dass Kohlendioxid, Wasserdampf und Stickstoff im Abgas mitgerissen werden und in die Verbrennungszone getragen werden. Weiter wird mit dem Strömungsgas das Verbrennungsgas verdünnt. Hierdurch werden Spitzentemperaturen innerhalb der Flamme reduziert, so dass im Prinzip eine gestufte Verbrennung erzeugt und die Produktion thermischer Stickoxide unterdrückt oder wenigstens signifikant eingedämmt wird. Außerdem wird der Flammenbereich aufgeweitet. Das bekannte Verfahren hat jedoch bisher den prognostizierten Erfolg nicht erreicht.

In der Druckschrift EP 1 326 049 A1 wird das Problem beschrieben, dass auch bei Gas-Sauerstoff-Befeuerung von Schmelzwannen ein deutlicher Anteil an $NO_x$ gebildet wird. Dies ist insbesondere problematisch, wenn das Glas noch mit Nitrat geläutert wird. Die $NO_x$-Reduzierung wird dadurch erreicht, dass im Abgas im Temperaturfenster von 100° C bis 1500° C eine geringe Menge Brennstoff zugeführt wird. Die Brennstoffradikale sollen dabei mit dem $NO_x$ reagieren. Der Brennwert des zusätzlichen Brennstoffs kann dabei 0,5 % bis 7,9 % des gesamten zugeführten Brennwerts betragen oder mindestens die 0,05-fache Menge der stöchiometrischen Energiemenge. Die Zeit bis zum Erreichen einer Abgastemperatur von 600° C soll dabei mindestens 0,3 s betragen.

Aus dem Dokument US 4,347,072 ist eine U-Flammenwanne oder Querbrennerwanne bekannt, bei der in den Abgasstrom Schweröl oder Kerosin oder ein anderes Hydrocarbonat in eine Richtung entgegen des Abgasstroms eingedüst wird. Hierdurch wird mittels einer chemischen Reaktion $NO_x$ zu N2 reduziert, die Reduktion beruht somit auf einer chemischen Umsetzung im Bereich des Brennerports und, weil die Reaktion Zeit benötigt, auch im oberen Bereich der sich an den Brennerport anschließenden Regenerativkammer. Ein ähnliches Verfahren offenbart auch das Dokument JP S55-154327 A.

Das Dokument WO 2016/193608 A1 zeigt und beschreibt eine U-Flammenwanne mit Injektoren für komprimiertes Gas. Diese sind in einem Bereich mit einer Entfernung zwischen 0,5 m und 1 m von dem jeweiligen Brennerport angeordnet. Das komprimierte Gas wird im Abzugsmodus zugeführt, wobei die Geschwindigkeit des zugeführten Gases bei mindestens 80 % der Schallgeschwindigkeit liegt. Die hohe Geschwindigkeit der Gaspartikel der bekannten U-Flammenwanne bedingt, dass die im Brennraum angeordnete Gasmischung verdünnt und die Flammenkerntemperatur reduziert wird. Dadurch wird in bekannter Weise die Bildung von thermischem $NO_x$ erschwert.

Um die Emission der Stickoxide zu minimieren, sollen grundsätzlich alle primären Maßnahmen ausgeschöpft werden. Die bereits genannten und aus dem Stand der Technik bekannten Primärmaßnahmen sind allerdings in der Praxis nicht immer erfolgreich. Dies liegt unter anderem daran, dass viele Parameter im Prozess starken Schwankungen unterworfen sind und nicht ausreichend schnell nachgeregelt werden können. Daher ist es nicht möglich, eine deutliche und gesicherte Reduktion der Stickoxide durch die bekannten Primärmaßnahmen sicherzustellen.

Die bekannten Sekundärmaßnahmen haben den Nachteil, dass diese zusätzliche Stoffe in den Glasherstellungsprozess einbringen.

Die Aufgabe der vorliegenden Erfindung besteht darin, ein weniger aufwändiges Verfahren anzugeben, welches eine zuverlässigere Reduktion der Stickoxid-Emission ermöglicht. Entsprechend ist die Aufgabe der vorliegenden Erfindung, eine einfache Glasschmelzanlage zu schaffen, welche eine geringere Stickoxid-Emission aufweist.

Die obige Aufgabe wird gelöst durch ein Verfahren mit den Merkmalen des Anspruchs 1.

Bei dem erfindungsgemäßen Verfahren wird dem Brennraum durch mindestens eine Brennerdüse des im Abzugsmodus betriebenen Brennerports und/oder durch mindestens eine von der Brennerdüse separate Zuführöffnung ein Impulsgas zugeführt, wobei die Zuführöffnung in der Stirnwand und/oder der Seitenwand neben dem und/oder in dem im Abzugsmodus betriebenen Brennerport angeordnet ist. Die Zuführöffnung ist vorzugsweise als Düse ausgebildet. Die Zuführöffnung ist mit der Impulsgaszufuhr verbunden.

Vorzugsweise wird als Impulsgas Pressluft, das heißt komprimierte Umgebungsluft oder ein komprimiertes Stickstoff/Sauerstoff-Gemisch, zugeführt. Durch das Zuführen des Impulsgases wird das Verbrennungsabgas im Brennraum in seiner Strömung beeinflusst. Das Impulsgas ist in der Regel ein Gasgemisch und kann Sauerstoff und/oder Stickstoff sowie in geringem Maße weitere Komponenten wie Argon oder Kohlenstoffdioxid enthalten. Vorzugsweise weist das Impulsgas eine Zusammensetzung mit 20 Vol.% bis 100 Vol.% Sauerstoff und einem restlichen Anteil Stickstoff sowie in geringem Maße weitere Komponenten auf, wobei auch technisch reiner Sauerstoff verwendet werden kann. Alternativ kann die Zusammensetzung vorzugsweise 70 Vol.% bis 100 Vol.% Stickstoff und einen restlichen Anteil Sauerstoff sowie in geringem Maße weitere Komponenten aufweisen, wobei auch technisch reiner Stickstoff verwendet werden kann. Besonders bevorzugt wird als Impulsgas Pressluft mit einer Zusammensetzung von 20,95 Vol.% Sauerstoff und 78,08 Vol.% Stickstoff sowie weiteren Komponenten verwendet. Das Impulsgas bremst das Abgas auf seinem Weg zu dem im Abzugsmodus betriebenen Brennerport. Das Gleichgewicht einer Reaktion im Brennraum, das bei einer Temperatur oberhalb von 1900° C zur Zerstörung von $NO_x$ führt, wird durch die Stauung des Abgases in Richtung der Zerstörung von $NO_x$ verschoben. Zusätzlich kann durch das Impulsgas weiterer Sauerstoff in den Brennraum eingebracht werden, der die Verbrennung beeinflusst.

Der Impuls des Impulsgases, welcher zum Abbremsen des Abgases führt, wird bestimmt durch das Produkt des Massenstroms des Impulsgases und seiner Austrittsgeschwindigkeit aus der jeweiligen Brennerdüse oder der jeweiligen Zuführöffnung. Der Massenstrom kann aus den Parametern Dichte des jeweiligen Gases und Volumenstrom berechnet werden, so dass sich der Impuls beispielsweise für aus der jeweiligen Brennerdüse oder der jeweiligen Zuführöffnung austretende Pressluft wie folgt ergibt:

Pressluft

Austrittsgeschwindigkeit 100m/s

| Volumenstrom | $m^3$/h | 100 | 150 | 200 |
|---|---|---|---|---|
| Impuls | kg*m/s$^2$ | 3,5 | 5,5 | 7,1 |

Austrittsgeschwindigkeit 200m/s

| Volumenstrom | $m^3$/h | 100 | 150 | 200 |
|---|---|---|---|---|
| Impuls | kg*m/s$^2$ | 7,1 | 10,1 | 14,2 |

In Versuchen hat sich herausgestellt, dass erfindungsgemäß ein Impuls des austretenden Impulsgases im Bereich von 1 kg*m/s$^2$ bis 30 kg*m/s$^2$, bevorzugt im Bereich 2 kg*m/s$^2$ bis 20 kg*m/s$^2$, in Bezug auf die Stickoxid-Reduktion aus der jeweiligen Brennerdüse oder der jeweiligen Zuführöffnung besonders wirksam ist.

Die Abnahme der Produktion des Stickoxids durch das Zuführen des Impulsgases ist dabei groß genug, dass der Einfluss von zusätzlichem Stickstoff, welcher gegebenenfalls durch das Impulsgas mit eingebracht wird, auf die Stickoxidproduktion vernachlässigt werden kann. Durch das Zuführen eines Impulsgases kann somit die Menge des im Abgas vorhandenen Stickoxids deutlich reduziert werden. Erfindungsgemäß wird das Impulsgas daher dem Brennraum durch die Brennerdüse und oder die Zuführöffnung in eine Richtung entgegen der Strömungsrichtung des Verbrennungsabgases derart zugeführt, dass das abströmende Verbrennungsabgas in dem Brennraum vor und/oder in dem Kanal des im Abzugsmodus betriebenen Brennerports gestaut wird. Hierbei bedeutet eine Stauung des Abgases, dass die Strömungsgeschwindigkeit des Abgases verringert wird, insbesondere die Strömungsgeschwindigkeitskomponente des Abgases, der in Richtung des im Abzugsmodus betriebenen Brennerport zeigt. Dies wird durch die sich in die entgegengesetzte Richtung bewegenden Moleküle des Impulsgases bewirkt, welche mit den Molekülen des Abgases kollidieren.

Erfindungsgemäß wird für die Zuführung des Impulsgases die mindestens eine Brennerdüse des jeweiligen, im Abzugsmodus betriebenen Brennerports verwendet. Durch die Zuführung des Impulsgases mittels der Brennerdüse können besonders große Eintrittsgeschwindigkeiten erreicht werden. Nach der vorliegenden Erfindung wird das Impulsgas mit einer Geschwindigkeit von 50 m/s bis 200 m/s, bevorzugt 150 m/s bis 200 m/s zugeführt. Damit kann das Impulsgas über die gesamte Länge des Brennraums der Glasschmelzanlage wirken, wodurch eine besonders gute Reduktion der Stickoxidproduktion erreicht wird.

Da für das erfindungsgemäße Verfahren nach diesem Ausführungsbeispiel keine zusätzlichen Düsen für das Impulsgas erforderlich sind, ist der Aufwand für die Stickoxidreduktion in diesem Ausführungsbeispiel vergleichsweise gering. Insbesondere ist mit der erfindungsgemäßen Lösung ein Nachrüsten oder Umrüsten einer bereits vorhandenen Glasschmelzanlage einfach möglich.

Zusätzlich kann eine oder mehrere Zuführöffnungen im Kanal des Brennerports, in einer Seitenwand des Kanals des Brennerports und/oder seitlich von dem Brennerport in der Stirnwand vorgesehen sein, welche zusätzlich oder alternativ Impulsgas in den Brennraum einbringt. Jeder der mindestens zwei Brennerports weist dabei die mindestens eine Zuführöffnung auf, sie wird jedoch nur im Abzugsmodus des jeweiligen Brennerports betrieben.

Es ist bevorzugt, dass das Impulsgas durch mindestens eine Brennerdüse des im Abzugsmodus betriebenen Brennerports und/oder durch eine von der Brennerdüse separate Zuführöffnung während eines Zeitraums zugeführt wird, in dem in dem in dem Brennmodus betriebenen (anderen, gegenüberliegenden) Brennerport Brennstoff zugeführt wird. Dies bedeutet, dass der Beginn der Zuführung des Impulsgases in den Brennraum an oder nach dem Zeitpunkt des Beginns der Zuführung des Brennstoffs in dem im Brennmodus betriebenen (anderen) Brennerport liegt. Hierdurch wird gewährleistet, dass lediglich das sich bei der Verbrennung auf der Seite des im Brennmodus betriebenen Brennerports bildende Abgas in seiner Strömung beeinflusst wird. Das Impulsgas soll nicht direkt die sich auf der Seite des im Brennmodus betriebenen Brennerport ausbildende Flamme beeinflussen.

In einem bevorzugten Ausführungsbeispiel der Erfindung wird die Brennerdüse im Brennmodus zur Zuführung des Brennstoffs mit einer größeren Querschnittsfläche im Bereich des Austritts des Brennstoffs betrieben als beim Zuführen des Impulsgases im Abzugsmodus. Die wirksame Querschnittsfläche der Brennerdüse beim Austritt des Brennstoffs ist somit größer als die wirksame Querschnittsfläche der Brennerdüse beim Austritt des Impulsgases. Dies wird beispielsweise dadurch erreicht, dass, wie unten beschrieben, der Auslass der Brennerdüse mehrere Kanäle aufweist, die je nach abzugebendem Gas zu- oder abgeschaltet werden. Beispielsweise kann die Brennerdüse eine Kerndüse und einen um die Kerndüse angeordneten Ringspalt aufweisen. Beim Zuführen von Impulsgas wird lediglich die Kerndüse genutzt, während Brennstoff aus der Kerndüse und dem Ringspalt austritt. Damit können die spezifischen Anforderungen an die Brennstoffzufuhr gewährleistet und eine verglichen mit dem Brennstoff geringere Menge an Impulsgas dem Brennraum zugeführt werden.

In einem weiteren bevorzugten Ausführungsbeispiel der Erfindung weisen die mindestens zwei Brennerports jeweils mindestens zwei Brennerdüsen auf. Im Brennmodus wird dabei eine innen liegende Brennerdüse des Brennerports nicht verwendet und daher nicht mit Brennstoff versorgt beziehungsweise nicht mit einer Brennstoffversorgung verbunden. Sie gibt daher im Brennmodus keinen Brennstoff ab. Bei U-Flammenwannen münden die mindestens zwei Brennerports an einer Stirnwand in den Brennraum. Die der Seitenwand nächstgelegene Brennerdüse eines Brennerports wird dabei als äußere Brennerdüse bezeichnet. Eine innen liegende Brennerdüse eines Brennerports ist hingegen die dem angrenzenden Brennerport nächstgelegene Brennerdüse. Durch die Abschaltung einer innen liegenden Brennerdüse wird der Brennstoff asymmetrisch in den Brennraum eingebracht und führt somit zu einer verzögerten bzw. gestuften Verbrennung. Wie oben bereits ausgeführt, wird dadurch bereits eine Reduktion der Stickoxidemission erreicht. Die innere Brennerdüse kann beispielsweise lediglich mit Brennstoff versorgt werden, wenn die Glasschmelzanlage besonders hoch belastet wird, sodass der Brennstoff verteilt auf mehrere Brennerdüsen zugeführt werden soll. Im Abzugsmodus hingegen werden alle Brennerdüsen des jeweiligen Brennerports mit Impulsgas versorgt. Somit wird das Impulsgas dem Brennraum durch alle Brennerdüsen des sich im Abzugsmodus befindenden Brennerport zugeführt. Damit kann das Impulsgas über die gesamte Breite des jeweiligen Brennerports wirken, um eine maximale Reduktion der Stickoxide zu erreichen.

Ferner ist von Vorteil, wenn das Impulsgas mit einem Vordruck von 100 kPa (= 1 bar) bis 1000 kPa (= 10 bar), bevorzugt von 100 kPa (= 1 bar) bis 500 kPa (= 5 bar), besonders bevorzugt von 400 kPa (= 4 bar) bis 500 kPa (= 5 bar) dem Brennraum zugeführt wird. Durch diesen hohen Druck gelangt das Impulsgas innerhalb des Brennraums auch an die von der Brennerdüse und/oder Zuführöffnung weiter entfernten Stellen und ist auch dort noch in der Lage, das gebildete Abgas abzubremsen. Damit wird im gesamten Brennraum die Produktion der Stickoxide vermindert, wodurch eine besonders niedrige Gesamtemission an Stickoxiden erreicht wird. Bevorzugt können pro Brennerdüse oder Zuführöffnung 50 Nm$^3$/h bis 400 Nm$^3$/h, besonders bevorzugt 50 Nm$^3$/h bis 200 Nm$^3$/h, ganz besonders bevorzugt 100 Nm$^3$/h bis 150 Nm$^3$/h Impulsgas in den Brennraum zugeführt werden.

In einem weiteren bevorzugten Ausführungsbeispiel der Erfindung beträgt das Volumen des zugeführten Impulsgases pro Brennerdüse oder Zuführöffnung 30 % bis 60 %, bevorzugt 40 % bis 55 %, besonders bevorzugt 48 % bis 52 % des Volumens des zugeführten Brennstoffs, wobei der gesamte, gleichzeitig zugeführte Brennstoff an allen in dieser Periode aktiven Brennerdüsen des parallel im Brennmodus arbeitenden Brennerports zugrunde gelegt wird. Es hat sich herausgestellt, dass, wenn das zugeführte Impulsgasvolumen pro Brennerdüse oder Zuführöffnung in etwa 48 % bis 52 % des gleichzeitig zugeführten Brennstoffvolumens entspricht, eine besonders große Reduktion der Stickoxidproduktion erreicht werden kann. Dazu kann das zugeführte Impulsgasvolumen vor Austritt aus der Brennerdüse und/oder Zuführöffnung mittels einer der jeweiligen Brennerdüse oder Zuführöffnung vorgeschalteten Volumenmesseinrichtung mit dem zugeführten Brennstoffvolumen verglichen werden. In einem Ausführungsbeispiel entspricht das Gesamtvolumen des in einer Periode zugeführten Impulsgases an dem oder den im Abzugsmodus betriebenen Brennerport(s) in etwa dem Gesamtvolumen des durch die parallel im Brennmodus betriebenen Brennerport(s) zugeführten Brennstoffs, da das Impulsgas durch eine größere Anzahl an Brennerdüsen und/oder Zuführöffnungen zugeführt wird. Bevorzugt weicht das Volumen des zugeführten Impulsgases weniger als 20%, besonders bevorzugt weniger als 10 % vom Volumen des zugeführten Brennstoffs ab.

Bezogen auf den Oxidanten kann das zugeführte Impulsgasvolumen lediglich 0,5 % bis 5 %, bevorzugt 0,5 % bis 2 %, besonders bevorzugt 1,2 % bis 1,9 % des Volumens des zugeführten Oxidanten betragen.

Es wird ferner eine Glasschmelzanlage beschrieben, bei der mindestens eine Brennerdüse jedes Brennerports oder mindestens eine Brennerdüse und mindestens eine von der Brennerdüse separate Zuführöffnung, welche vorzugsweise als Düse ausgebildet ist, zum Zuführen eines Impulsgases eingerichtet ist. Dabei ist die Zufuhr des Impulsgases derart steuerbar, dass dieses im Abzugsmodus des jeweiligen Brennerports zugeführt wird.

Die mindestens eine Zuführöffnung ist in der Stirnwand und/oder der Seitenwand neben und/oder in dem Brennerport angeordnet. Dies bedeutet, dass die Zuführöffnung in dem Kanal des Brennerports zwischen zwei Brennerdüsen oder neben einer Brennerdüse angeordnet sein kann. Die Zuführöffnung ist bei einer Anordnung außerhalb des Kanals des Brennerports vorzugsweise in der Wand des Brennraums angeordnet, in der auch der jeweilige Brennerport in den Brennraum mündet. Hierbei bedeutet "neben dem Brennerport angeordnet", dass die Zuführöffnung höchstens in einem Abstand von 500 mm, vorzugsweise höchstens in einem Abstand von 200 mm, von dem Brennerport in der Stirnwand und/oder der Seitenwand, in der sich der Brennerport befindet, angeordnet ist. Hierbei wird unter "Abstand" die Entfernung des Mittelpunkts des Brennerports und der jeweiligen Zuführöffnung in der Ebene der Oberfläche der jeweiligen Wand verstanden.

Zur Steuerung der Zufuhr von Brenngas und Impulsgas zu der jeweiligen Brennerdüse im Brennmodus beziehungsweise Abzugsmodus und/oder zu der Zuführöffnung ist an der Glasschmelzanlage eine entsprechende Steuerungseinrichtung vorgesehen. Wie oben bereits erläutert wurde, kann durch die Glasschmelzanlage mittels einer einfach realisierbaren Maßnahme die Emission von Stickoxiden stark reduziert werden.

Die Glasschmelzanlage kann zwei oder mehr als zwei Brennerports aufweisen. Jeder Brennerport besitzt mindestens eine Brennerdüse, vorzugsweise mindestens zwei Brennerdüsen, besonders bevorzugt mindestens drei oder mehr als drei Brennerdüsen.

In einem Ausführungsbeispiel einer Glasschmelzanlage, in der das erfindungsgemäße Verfahren umgesetzt wird, ist die mindestens eine Brennerdüse über ein erstes Ventil, vorzugsweise ein Motorventil, mit einer Brennstoffzufuhr verbunden und über ein zweites Ventil, vorzugsweise ein Motorventil, mit der Impulsgaszufuhr verbunden. Diese Brennerdüse kann daher abwechselnd Brennstoff oder Impulsgas abgeben. Bei einem Wechsel vom Brennmodus zum Abzugsmodus muss an der Brennerdüse lediglich das erste Ventil geschlossen und das zweite Ventil geöffnet werden. Bei einem Wechsel vom Abzugsmodus zum Brennmodus wird entsprechend das zwischen Brennerdüse und Impulsgaszufuhr angeordnete zweite Ventil geschlossen und das zwischen Brennerdüse und Brennstoffzufuhr angeordnete erste Ventil geöffnet. Durch die Verwendung von Motorventilen kann einerseits eine Steuerung von einer entfernten Position erfolgen, was die Bedienung aufgrund der hohen Temperaturen wesentlich vereinfacht. Darüber hinaus ist in diesem Fall eine automatische Steuerung des ersten Ventils und des zweiten Ventils jeder Brennerdüse beispielsweise durch eine in der oben erwähnten Steuerungseinrichtung realisierte Regelung oder Steuerung möglich. Auch die Zuführöffnung kann über ein Ventil, vorzugsweise ein Motorventil, mit der Impulsgaszufuhr verbunden sein. Dieses Ventil wird beim Wechsel vom Abzugsmodus zum Brennmodus geschlossen und beim Wechsel vom Brennmodus zum Abzugsmodus geöffnet.

Zudem kann die mindestens eine Brennerdüse über ein Rückschlagventil mit der Brennstoffzufuhr und/oder über ein Rückschlagventil mit der Impulsgaszufuhr verbunden sein. Dadurch kann effizient verhindert werden, dass das Impulsgas in die Brennstoffzufuhr eindringen kann beziehungsweise dass Brennstoff in die Impulsgaszufuhr gelangt. Besonders bevorzugt ist die Zuleitung für das Impulsgas zwischen der Brennerdüse und dem in Strömungsrichtung des Brenngases hinter der Brennstoffzufuhr angeordneten Rückschlagventil für das Brenngas angeschlossen.

In einem weiteren Ausführungsbeispiel gemäß dem erfindungsgemäßen Verfahren ist an den mindestens zwei Brennerports die mindestens eine Brennerdüse unterhalb des Kanals zur Zuführung des Oxidant angeordnet. Dies bedeutet, dass der Kanal zwischen der Brennerdüse und der Oberfläche der Glasschmelze liegt. Durch diese sogenannte Unterbankfeuerung wird der Stickoxidanteil am Abgas weiter reduziert.

In einem weiteren Ausführungsbeispiel gemäß dem erfindungsgemäßen Verfahren ist der Winkel einer Brennerdüse im Brennmodus zum Zuführen des Brennstoffs und im Abzugsmodus zum Zuführen des Impulsgases identisch.

Der Winkel der Brennerdüse bzw. der Zuführöffnung ist festgelegt durch den Winkel zwischen einer zentralen Achse der Brennerdüse bzw. der Zuführöffnung und der Horizontalen. Die zentrale Achse der Brennerdüse beziehungsweise der Zuführöffnung ist die Achse, die im Wesentlichen mit der Strömungsrichtung in der Brennerdüse bzw. der Zuführöffnung übereinstimmt. Die Horizontale ist festgelegt durch die vorgesehene Horizontalausrichtung der Glasschmelzanlage. Diese ist bei einer Glasschmelzanlage in Betrieb durch die Lage des Spiegels der Glasschmelze in dem Schmelzbecken (im vollständig aufgeschmolzenen Zustand) gegeben. Der Winkel der Brennerdüse und/oder der Zuführöffnung liegt vorzugsweise zwischen 0° und 20°, besonders bevorzugt zwischen 0° und 10°, ganz besonders bevorzugt zwischen 0° und 8°.

Dies bedeutet, dass beim Wechsel vom Brennmodus zum Abzugsmodus und umgekehrt lediglich die Zufuhr des jeweiligen Gases geändert werden muss. Eine mechanische Verstellung der Brennstoffdüse selbst ist nicht erforderlich. Hierdurch ist keine zusätzliche Mechanik an der Brennstoffdüse notwendig, welche auch gewartet werden muss.

Alternativ kann der Winkel der Brennerdüse bei der Abgabe von Brenngas und bei der Abgabe von Impulsgas, das heißt im Brennmodus und im Abzugsmodus, unterschiedlich sein und vorzugsweise ebenfalls in dem oben angegebenen Bereich liegen.

Bei einer U-Flammenwanne wird in einem Ausführungsbeispiel die Ausrichtung der Brennerdüse und/oder der Zuführöffnung (d.h. deren zentraler Achse) bei einer Projektion auf die Ebene der Oberfläche der Glasschmelze in eine Richtung senkrecht zur Durchflussrichtung/Strömungsrichtung des Glases, d.h. die Komponente in Y-Richtung, derart gewählt, dass diese nicht auf den Bereich der Flamme des gegenüberliegenden Brennerports zeigt. Die zentrale Achse der Brennerdüse und/oder der Zuführöffnung verläuft daher im Wesentlichen parallel zu dem Durchflussweg der Glasschmelze durch die Glasschmelzanlage. Insbesondere kann die zentrale Achse die Zuführöffnung (im Wesentlichen) parallel zu der zentralen Achse der Brennerdüse ausgerichtet sein. Im Wesentlichen parallel bedeutet dabei mit einem Winkel kleiner als 20°, bevorzugt kleiner als 10°, besonders bevorzugt kleiner als 5° zu der zentralen Achse der Brennerdüse des gleichen Brennerports.

Es ist weiter von Vorteil, wenn die mindestens eine Brennerdüse und/oder die mindestens eine Zuführöffnung über mindestens eine Einrichtung zur Volumenmessung mit der Brennstoffzufuhr beziehungsweise der Impulsgaszufuhr verbunden ist. Dies bedeutet, dass im Strömungsweg des Brennstoffs und/oder des Impulsgases zwischen der Brennstoffzufuhr und/oder der Impulsgaszufuhr und der mindestens einen Brennerdüse eine Volumenmesseinrichtung angeordnet ist. Durch eine genaue Bestimmung der zugeführten Brennstoffvolumens beziehungsweise des zugeführten Impulsgasvolumens können die optimalen Parameter zum Betrieb der Glasschmelzanlage bestimmt und eingestellt werden. Insbesondere kann der Impuls des Impulsgases innerhalb der oben angegebenen Grenzen eingestellt werden.

Weiterhin kann eine Stickoxid-Messsonde vorgesehen sein, welche im Bereich des Ausgangs des Brennerports (bezogen auf den Weg der Verbrennungsabgase) angeordnet ist, nämlich im Abzug der Verbrennungsabgase, besonders bevorzugt am Anfang des Bereichs im Verbrennungsgasabzug nach Ende des Brennerports, in dem der Wärmeaustausch des Abgases mit dem zugeführten Gas erfolgt. Diese Stickoxid-Messsonde kann kontinuierlich oder in regelmäßigen zeitlichen Abständen, z.B. jede Minute, die Konzentration der Stickoxide (im Folgenden Stickoxid-Konzentration) im Verbrennungsabgas messen. Die von der Stickoxid-Messsonde gemessenen Stickoxid-Konzentrationen können in einem Regelkreis verwendet werden, welcher den Volumenstrom des Impulsgases - und somit auch dessen Impuls - abhängig von der gemessenen Stickoxid-Konzentration regelt. Insbesondere kann der Volumenstrom des durch die Brennerdüse und/oder die Zuführöffnung zugeführten Impulsgases abhängig von der im Verbrennungsabgas gemessenen Stickoxid-Konzentration geregelt werden. Entsprechend kann im Ausgang eines Brennerports eine Stickoxid-Messsonde oder im Ausgang mehrerer Brennerports jeweils eine Stickoxid-Messsonde angeordnet und eine Regelung vorgesehen sein, wobei die Regelung derart eingerichtet ist, dass der Volumenstrom des durch die Brennerdüse und/oder die Zuführöffnung zugeführten Impulsgases abhängig von der im Verbrennungsabgas gemessenen Stickoxid-Konzentration regelbar ist, und wobei Stickoxid-Messsonde derart eingerichtet ist, dass sie die jeweils vorliegende Stickoxid-Konzentration im Verbrennungsabgas misst und die gemessene Stickoxid-Konzentration an die Regelung übermittelt. Hierfür können bei der Einrichtung der Glasschmelzanlage Kennlinien aufgenommen werden, die den Zusammenhang zwischen Volumenstrom des Impulsgases (z.B. Pressluft) und der Stickoxid-Konzentration beinhalten. Weitere Parameter für die Kennlinien sind beispielsweise die Temperatur im Brennraum und der Energieeintrag der Glasschmelzanlage. Der Energieeintrag ist die für das Betreiben der Glasschmelzanlage insgesamt aufgebrachte Energie. Es existiert ein linearer Zusammenhang zwischen der Minderung der Stickoxidkonzentration und dem Gesamt-Volumenstrom des Impulsgases (d.h. der Volumenstrom durch alle Brennerdüsen und Zuführöffnungen, soweit vorhanden). Dieser Zusammenhang wird durch die Kennlinien abgebildet und kann für die Regelung verwendet werden. Alternativ kann der Gesamt-Volumenstrom des Impulsgases geregelt werden.

In einem weiteren Ausführungsbeispiel der Erfindung gemäß dem erfindungsgemäßen Verfahren weist die mindestens eine Brennerdüse mindestens zwei Düsenkanäle auf, welche unabhängig voneinander von Gas durchströmt werden können. Dies bedeutet, dass jeder Düsenkanal der mindestens zwei Düsenkanäle separat mit der Brennstoffzufuhr und/oder der Impulsgaszufuhr verbunden ist. Insbesondere kann die Brennerdüse ein Mantelrohr aufweisen, in dem ein weiteres Rohr konzentrisch angeordnet ist. Dieses Rohr wird auch als Kernrohr bezeichnet. Durch dieses Kernrohr wird ein erster Düsenkanal gebildet. Zwischen dem Mantelrohr und Kernrohr bildet sich durch die konzentrische Anordnung der Rohre ein hohlzylindrischer Spalt oder Ringspalt, der als zweiter Düsenkanal der Brennerdüse dienen kann. Durch die Verwendung der einzelnen Düsenkanäle oder beider Düsenkanäle gemeinsam kann die Brennerdüse mit verschiedenen Querschnittsflächen betrieben werden, ohne dass für die Brennerdüse bewegliche Teile erforderlich wären. Damit ist es möglich, die benötigte Brennstoffmenge und die benötigte Impulsgasmenge in den verschiedenen Betriebsmodi (Brennmodus, Abzugsmodus) jeweils optimal einzustellen.

In einem Ausführungsbeispiel gemäß dem erfindungsgemäßen Verfahren ist hierbei ein erster Düsenkanal mit der Brennstoffzufuhr und mit der Impulsgaszufuhr verbunden und ein zweiter Düsenkanal lediglich mit der Brennstoffzufuhr verbunden. Damit wird also eine kleine Querschnittsfläche der Brennerdüse sowohl zum Zuführen des Impulsgases als auch zum Zuführen des Brennstoffs verwendet. Ein zweiter Düsenkanal mit einer weiteren Querschnittsfläche ist ausschließlich zur Brennstoffzufuhr vorgesehen. Bei einer Gestaltung der Brennerdüse mit Mantelrohr und konzentrisch angeordnetem Kernrohr ergibt sich die maximale Querschnittsfläche aus der Summe der Querschnittsflächen des Kernrohrs und des Ringspalts zwischen Kernrohr und Mantelrohr. Zum Zuführen des Impulsgases wird beispielsweise lediglich das Kernrohr verwendet, während der Brennstoff im Brennmodus über Kernrohr und Ringspalt zugeführt wird.

Es kann außerdem vorgesehen sein, dass jeder Brennerport mit einer Regenerativkammer verbunden ist. Die Regenerativkammer ist insbesondere mit dem Kanal, durch den das Abgas im Abzugsmodus den Brennraum verlässt, verbunden. Die Regenerativkammer des jeweiligen Brennerports wird dann im Abzugsmodus durch die noch heißen Verbrennungsgase durchströmt, sodass sich beispielsweise eine in der Regenerativkammer angeordnete keramische Gitterung aufheizt. Bei einem Brennerport im Brennmodus wird der Oxidant durch die bereits aufgeheizte Gitterung der Regenerativkammer geführt, sodass der Oxidant auf dem Weg in die Brennkammer vorgeheizt wird. Dies führt zu einer starken Reduktion der Abwärme und somit zu einer wesentlich verbesserten Energieeffizienz der Glasschmelzanlage.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen schematisch:

Fig. 1    ein erstes Ausführungsbeispiel einer Glasschmelzanlage mit U-Flammenbeheizung, die das erfindungsgemäße Verfahren verwirklicht, im Längsschnitt,

Fig. 2    ein zweites Ausführungsbeispiel einer solchen Glasschmelzanlage mit U-Flammenbeheizung im Längsschnitt mit Zuführöffnung,

Fig. 3    eine Stirnwand eines dritten Ausführungsbeispiels einer Glasschmelzanlage mit U-Flammenbeheizung mit dem erfindungsgemäßen Verfahren in einer Ansicht von vorn,

Fig. 4    ein Ausführungsbeispiel einer Brennerdüse der Glasschmelzanlage gemäß Fig. 1 im Querschnitt mit einem Anschlussdiagramm der Brennerdüse und

Fig. 5    ein Diagramm, das die gemessene Konzentration an NOx (bezogen auf 8 % Rest $O_2$) und an $O_2$ an einer Glasschmelzanlage (mit U-Flammenbeheizung) in Abhängigkeit von der Zeit t darstellt.

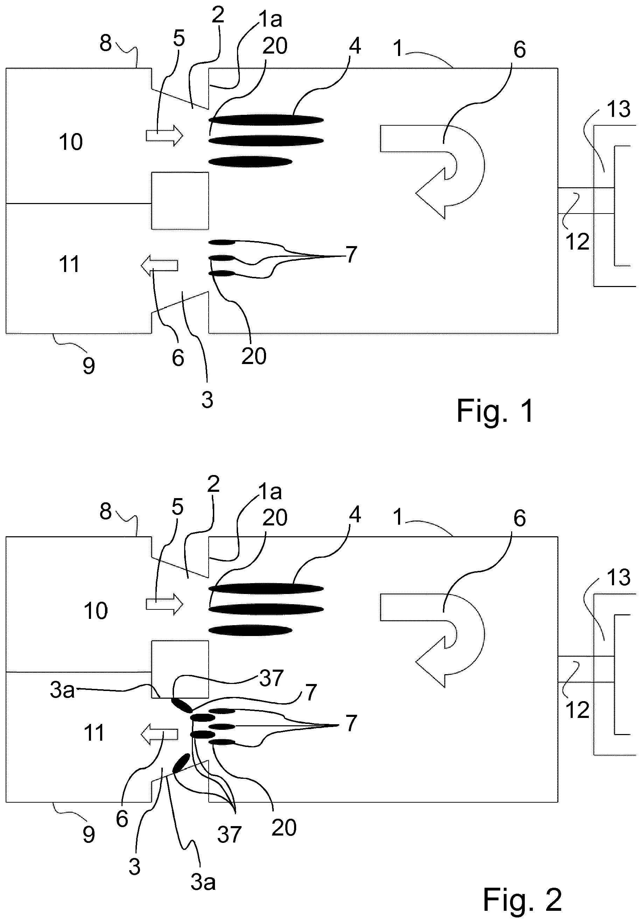

Ein erstes Ausführungsbeispiel einer Glasschmelzanlage vom Typ einer U-Flammenwanne, die das erfindungsgemäße Verfahren verwirklicht, ist in Fig. 1 dargestellt. Die Figur zeigt einen Brennraum 1, in den an einer Stirnwand 1a zwei Brennerports 2, 3 einmünden. Unterhalb des Brennraumes 1 ist ein Schmelzbecken angeordnet. In diesem Schmelzbecken befindet sich das Glas, das heißt die Glasschmelze und gegebenenfalls das zum Einschmelzen vorgesehene Schmelzgut. Der Brennraum 1 wird daher nach unten durch das im Schmelzbecken angeordnete Glas abgeschlossen.

An der den Brennerports 2, 3 gegenüber liegenden Stirnwand 1b weist die Glasschmelzanlage einen Auslass 12 zur Abführung der Glasschmelze auf. An diesem Auslass 12 sind zwei Feeder 13 angeordnet, durch welche die Glasschmelze den jeweiligen Herstellungs- oder Verarbeitungseinheiten zugeführt werden kann.

Durch den ersten Brennerport 2 wird in einem Brennmodus ein Brennstoff 4 mit der Zusammensetzung des in Europa üblichen Verbundgases ("Verbund Erdgas Nord") und ein Oxidant (veranschaulicht durch Pfeil 5) mit der Zusammensetzung der Umgebungsluft in den Brennraum 1 eingeführt. Dazu weist der Brennerport 2 einen Kanal zur Zuführung des Oxidanten 5 und drei Brennerdüsen 20 zur Zuführung des Brennstoffs 4 auf. In dem Brennraum 1 findet die Verbrennung hauptsächlich auf der Seite statt, in die der Brennstoff 4 und der Oxidant 5 zugeführt wird. Die durch die Feuerung erzeugte Wärme wird vorwiegend mittels Strahlung auf die Glasschmelze und gegebenenfalls das Schmelzgut übertragen. Das bei der Verbrennung entstehende Verbrennungsabgas (veranschaulicht mittels Pfeilen 6) nimmt zum Großteil im Brennraum 1 einen im Wesentlichen U-förmigen Weg und verlässt den Brennraum 1 durch den Kanal des zweiten Brennerports 3 auf der anderen Seite, der in einem Abzugsmodus betrieben wird. Ein Teil des Verbrennungsabgases 6 kann auch einen kürzeren, eher C-förmigen oder den direkten Weg von dem ersten Brennerport 2 zu dem zweiten Brennerport 3 nehmen.

Der erste Brennerport 2 und der zweite Brennerport 3 werden jeweils im Wechsel im Brennmodus und im Abzugsmodus betrieben. Wenn der erste Brennerport 2 im Brennmodus ist, erfolgt der Betrieb des zweiten Brennerports 3 im Abzugsmodus und umgekehrt.

Der zweite Brennerport 3 weist ebenfalls drei Brennerdüsen 20 auf. Durch jede der drei Brennerdüsen 20 wird an dem zweiten Brennerport 3 im Abzugsmodus anstelle des Brennstoffs 4 ein Impulsgas 7 mit der Zusammensetzung der Umgebungsluft zugeführt. Das Impulsgas 7 wird durch die Brennerdüsen (20) entgegen der Strömungsrichtung des Verbrennungsabgases 6 zugeführt, derart dass das Verbrennungsabgas 6 vor und in dem Kanal des zweiten Brennerports 3 gestaut und auf seinem Weg in Richtung des zweiten Brennerports 3 abgebremst wird. Hierbei ist das Impulsgas 7 nicht auf die auf der Seite des ersten Brennerports 2 brennende Flamme gerichtet. Vielmehr bewegt sich das Impulsgas in eine Richtung, welche der Bewegungsrichtung der Moleküle des Abgases auf ihrem Weg zum zweiten, im Abzugsmodus betriebenen Brennerport 3 entgegengerichtet ist. Hierdurch wird ein in dem Brennraum 1 bestehendes Reaktionsgleichgewicht in Richtung der Zerstörung von Stickoxiden verschoben. Gegebenenfalls kann durch das Impulsgas zusätzlicher Sauerstoff in den Brennraum 1 eingebracht werden. Dadurch kann der Anteil an Stickoxiden in dem Verbrennungsabgas reduziert werden.

Die Brennerdüsen 20 des ersten Brennerports 2 und des zweiten Brennerports 3 sind vorzugsweise derart angeordnet, dass der Oxidant im Brennmodus durch den Kanal des jeweiligen Brennerports 2, 3 oberhalb der Brennerdüsen 20 in den Brennraum einströmt.

Jeder Brennerport 2, 3 ist zusätzlich mit einer Regenerativkammer 8, 9 verbunden, die jeweils eine keramische Gitterung 10, 11 aufweist. Das Verbrennungsabgas 6, welches den Brennraum 1 durch den zweiten, im Abzugsmodus arbeitenden Brennerport 3 verlässt, strömt durch die keramische Gitterung 11 der Regenerativkammer 9 und erwärmt diese. Auf der anderen Seite, am Brennerport 2 im Brennmodus, steht die durch die vorherige Feuerperiode aufgeheizte erste Regenerativkammer 8 mit der zugehörigen keramischen Gitterung 10 zur Vorwärmung des Oxidanten zur Verfügung. Dieser durchströmt die keramische Gitterung 10 der ersten Regenerativkammer 8 auf dem Weg zum ersten Brennerport 2 und wird dadurch vorgeheizt. Die keramischen Gitterungen 10, 11 sind dazu gasdurchlässig aufgebaut und können die Wärme des Verbrennungsabgases 6 aufnehmen und die gespeicherte Wärme an den einströmenden Oxidant 5 abgeben.

Fig. 2 zeigt ein zweites Ausführungsbeispiel einer Glasschmelzanlage mit dem erfindungsgemäßen Verfahren mit Zuführöffnungen 37. Die Funktionsweise der Glasschmelzanlage der Fig. 2 ist im Wesentlichen identisch mit der Glasschmelzanlage der Fig. 1. Die Zuführung des Impulsgases 7 erfolgt jedoch zusätzlich durch vier in dem zweiten Brennerport 3 angeordneten Zuführöffnungen 37, wobei jede Zuführöffnung 37 vorzugsweise als Düse ausgebildet und mit der Impulsgaszufuhr 33 verbunden ist. Zwei der Zuführöffnungen 37 sind in dem zweiten Brennerport 3, insbesondere in einer Seitenwand 3a des Kanals des zweiten Brennerports 3 angeordnet. Zwei weitere Zuführöffnungen sind zwischen jeweils zwei der drei Brennerdüsen 20 des Brennerports 3 angeordnet. Durch jede der vier Zuführöffnungen 37 wird an dem zweiten Brennerport 3 im Abzugsmodus ein Impulsgas 7 mit der Zusammensetzung der Umgebungsluft zugeführt. Durch das Zuführen des Impulsgases 7 wird auch in diesem Ausführungsbeispiel die Strömung des Verbrennungsabgases 6 im Brennraum 1 derart beeinflusst, dass das Abgas auf seinem Weg in Richtung des zweiten Brennerports 3 abgebremst wird. Insbesondere werden die Verbrennungsabgase 6 vor und in dem Kanal des zweiten Brennerports 3 gestaut.

Bei dem in Fig. 2 dargestellten Ausführungsbeispiel sind die Zuführöffnungen 37 selbstverständlich analog auch im ersten Brennerport 2 mit der gleichen Anordnung vorgesehen. Sie werden jedoch im Brennmodus, in dem in Fig. 2 dieser Brennerport 2 betrieben wird, nicht mit dem Impulsgas 7 versorgt.

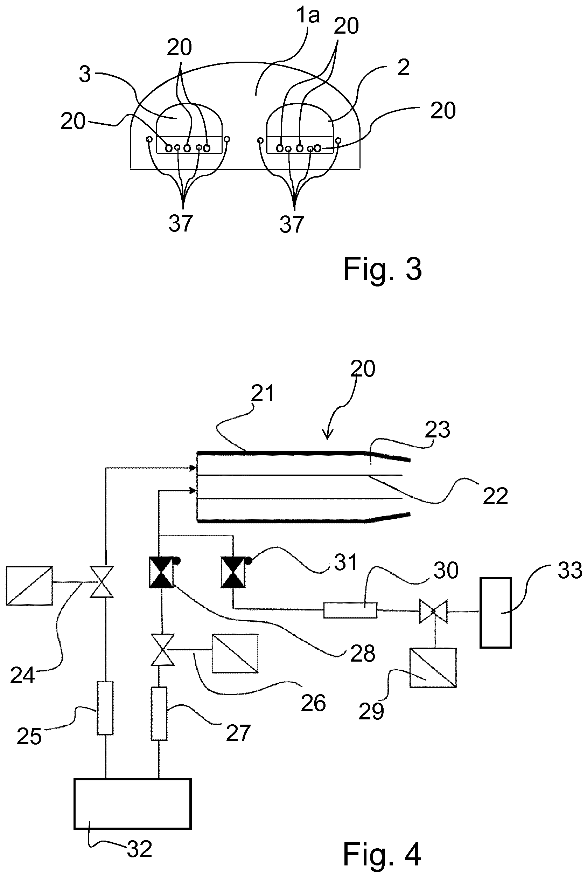

Fig. 3 zeigt die Stirnwand 1b einer erfindungsgemäßen Glasschmelzanlage, in die zwei Brennerports 2, 3 einmünden. An jedem Brennerport sind drei Brennerdüsen 20 angeordnet, die zur Zuführung des Brennstoffs 4 und gegebenenfalls eines Impulsgases 7 genutzt werden können. An den Brennerports 2, 3 sind zusätzlich vier Zuführöffnungen 37 vorgesehen, die vorzugsweise als Düsen ausgebildet sind, zur Zuführung von Impulsgas 7 dienen und mit einer Impulsgaszufuhr 33 verbunden sind. Zwei der Zuführöffnungen 37 sind zwischen je zwei Brennerdüsen 20, auf gleicher Höhe wie die Brennerdüsen 20 angeordnet. Zwei weitere Zuführöffnungen 37 sind neben dem jeweiligen Brennerport 2, 3 in der Stirnwand 1b angeordnet. Diese sind etwas weiter oberhalb verglichen mit den Brennerdüsen 20, d. h. etwas weiter von der Oberfläche der Glasschmelze entfernt als die Brennerdüsen 20, angeordnet.

Ein Beispiel einer Brennerdüse 20, welche in den Brennerports 2, 3 eingesetzt werden kann, ist in Fig. 4 dargestellt. Weiter ist die Versorgung der Brennerdüse 20 mit Brennstoff 4 und mit dem Impulsgas 7 dargestellt.

Die Brennerdüse 20 weist zwei Düsenkanäle 22, 23 auf, die unabhängig voneinander von Gas durchströmt werden können. Ein erster Düsenkanal ist dabei durch ein in einem Mantelrohr 21 mittig angeordnetes Rohr 22 gebildet, das auch als Kernrohr bezeichnet wird. Dieses ist konzentrisch in dem Mantelrohr 21 angeordnet. Zwischen Mantelrohr 21 und Kernrohr 22 wird ein hohlzylindrischer Spalt oder Ringspalt 23 ausgebildet, wobei durch diesen Ringspalt 23 ein zweiter Düsenkanal der Brennerdüse 20 gebildet ist.

Der zweite Düsenkanal der Brennerdüse 20 ist über ein erstes Ventil 24, welches vorzugsweise als Motorventil ausgebildet ist, und eine erste Einrichtung zur Volumenmessung 25 mit einer Brennstoffzufuhr 32 verbunden. Die erste Einrichtung zur Volumenmessung 25 misst dabei das Volumen des Brennstoffs, welches durch diese Zuführleitung und damit durch den Ringspalt 23 der Brennerdüse 20 fließt und an den Brennraum 1 abgegeben wird.

Der erste Düsenkanal der Brennerdüse 20, welcher durch das Kernrohr 22 gebildet ist, ist über ein erstes Rückschlagventil 28 und ein zweites Ventil 26, welches ebenfalls bevorzugt als Motorventil ausgebildet ist, und eine zweite Einrichtung zur Volumenmessung 27 ebenfalls mit der Brennstoffzufuhr 32 verbunden. Durch die Volumenmessung 27 ist es möglich, das Volumen des dem Brennraum 1 zugeführten Brennstoffs 4 durch das Kernrohr 22 zu bestimmen. Zwischen dem ersten Rückschlagventil 28 und der Brennerdüse 20 ist eine weitere Anschlussleitung vorgesehen. Diese ist über ein drittes Ventil 29, vorzugsweise ein Motorventil, eine dritte Einrichtung zur Volumenmessung 30 und ein weiteres Rückschlagventil 31 mit der Impulsgaszufuhr 33 verbunden. Durch die Volumenmessung kann das zugeführte Volumen des Impulsgases 7 an das Kernrohr 22 der Brennerdüse 20 bestimmt werden. Durch die Rückschlagventile 28, 31 wird verhindert, dass Brennstoff 4 in die Zufuhrleitung für das Impulsgas 7 beziehungsweise dass Impulsgas 7 in die Zuführleitung für den Brennstoff 4 eindringen kann.

Im Brennmodus werden in dem ersten Brennerport 2 drei der in Fig. 4 gezeigten Brennerdüsen 20 zur Zuführung von Brennstoff 4 genutzt. Dazu ist das dritte Ventil 29 für das Impulsgas 7 jeder Brennerdüse 20 geschlossen, sodass keine offene Verbindung zwischen der Brennerdüse 20 und der Impulsgaszufuhr 33 besteht. Gleichzeitig sind sowohl das erste Ventil 24 als auch das zweite Ventil 26 geöffnet, sodass Brennstoff 4 von der Brennstoffzufuhr 32 zur Brennerdüse 20 gelangen kann. Durch die Stellung des ersten Ventils 24 kann das Volumen des zugeführten Brennstoffs 4 zu dem durch den Ringspalt 23 gebildeten Brennerdüsenkanal geregelt werden. Basierend auf einer gleichzeitigen Messung des zugeführten Volumens des Brennstoffs 4 mit der ersten Einrichtung zur Volumenmessung 25 kann das zugeführte Volumen genau auf einen Sollwert eingestellt werden. Gleiches gilt für das zweite Ventil 26, mit dem das zugeführte Brennstoffvolumen an das Kernrohr 22 geregelt werden kann, wobei die Kontrolle des zugeführten Volumens über die zweite Einrichtung zur Volumenmessung 27 erfolgt.

Bei einem Betriebsmodus-Wechsel wird bei jeder Brennerdüse 20 des ersten Brennerports 2 durch Betätigen des ersten Ventils 24 und des zweiten Ventils 26 die Brennstoffzufuhr 32 zur Brennerdüse 20 abgeschnitten. Stattdessen wird das dritte Ventil 29 jeder Brennstoffdüse 20 geöffnet, um das Impulsgas 7 an das Kernrohr 22 der Brennerdüse 20 zu leiten, so dass dieses in den Brennraum 1 abgegeben wird. Das zugeführte Volumen des Impulsgases 7 kann durch das dritte Ventil 29 geregelt werden und das zugeführte Volumen durch die dritte Einrichtung zur Volumenmessung 30 kontrolliert werden. An dem zweiten Brennerport 2 wird außerdem vorzugsweise zeitgleich die Zufuhr von Oxidant 5 unterbrochen. Der erste Brennerport 2 wird nun im Abzugsmodus betrieben.

Demgegenüber erfolgt am zweiten Brennerport 3 gleichzeitig ein Wechsel vom Abzugsmodus in den Brennmodus. Hierfür werden an jeder Brennerdüse 20 das erste Ventil 24 und das zweite Ventil 26 geöffnet, so dass Brennstoff 4 aus beiden Kanälen 22, 23 der Brennerdüse in den Brennraum 1 austritt. Gleichzeitig wird das dritte Ventil 29 für das Impulsgas geschlossen. Weiter wird nun dem zweiten Brennerport 3 und hierdurch dem Brennraum 1 über die Gitterung 10 Oxidant zugeführt.

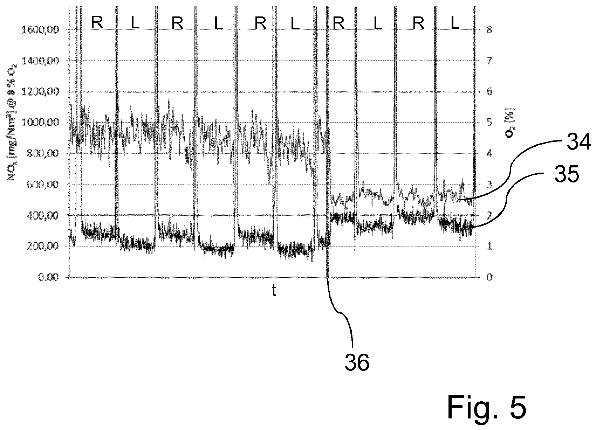

Eine Versuchsmessung der Stickoxid-Konzentration 34 mittels einer an einem Ausgang eines Brennerports (bezogen auf den Weg der Verbrennungsabgase) angeordneten Stickoxid-Messsonde und der Sauerstoff-Konzentration 35 gemessen nach dem Brennraum 1 einer laufenden Glasschmelzanlage ist in Fig. 5 dargestellt. Die Messkurven der Stickoxid-Konzentration 34 und der Sauerstoff-Konzentration 35 sind jeweils über der Zeit t aufgetragen. Die Glasschmelzanlage der Versuchsmessung weist einen rechten Brennerport R (= rechts) und einen linken Brennerport L (= links) auf. Die beiden Messkurven 34, 35 zeigen einzelne Spitzen, die jeweils durch den Wechsel der Brennerports zwischen Brennmodus und Abzugsmodus verursacht werden. Zwischen den Spitzen ist für die einzelnen Phasen der jeweils im Brennmodus betriebene Brennerport R, L angegeben. Zu Beginn der Messung wird kein Impulsgas 7 in den Brennraum 1 eingedüst. Die Stickoxid-Konzentration 34 schwankt sehr stark um einen Mittelwert von etwa 900 mg/Nm$^3$, wie sich der linken Skala des Graphen entnehmen lässt. Die Sauerstoff-Konzentration 35 schwankt in etwa zwischen 1 % und 1,5 %, wie sich der rechten Skala des Graphen entnehmen lässt. Ab dem Startzeitpunkt 36 der Impulsgaszuführung zeigt sich eine starke Reduktion der Stickoxid-Konzentration 34 auf Werte zwischen etwa 400 mg/Nm³ und 600 mg/Nm³. Gleichzeitig steigt die Sauerstoff-Konzentration 35 durch den zusätzlich zugeführten Sauerstoff im Impulsgas 7 leicht an auf Werte zwischen 1,5 % und 2 %.

Durch das erfindungsgemäße Verfahren und die Glasschmelzanlage kann somit besonders einfach eine starke Reduktion der Stickoxidemission erreicht werden. Die Reduktion des Stickoxids kann über den Volumenstrom des Impulsgases basierend auf den Stickoxid-Messwerten geregelt werden (siehe oben).

Ausführungsbeispiel :

Eine U-Flammenwanne für eine Glasproduktion von ca. 100 t/Tag wird mit zwei Brennerdüsen 20 je Brennerport 2, 3 betrieben. Als Brennstoff 4, der im Brennmodus zugeführt wird, dient Erdgas, dessen Gesamtverbrauch bei 500 Nm³/h liegt. Die verwendete Menge an Oxidant 5 in Form von Luft beträgt ca. 5000 Nm³/h. Im Abzugsmodus wird dem jeweiligen Brennerport 2, 3 durch beide Brennerdüsen 20 über das Kernrohr 22 in Summe 250 Nm³/h Luft als Impulsgas 7 mit 5 bar Vordruck zugeführt. Der Düsendurchmesser des Kernrohrs 22 beträgt beispielsweise 22 mm. Dadurch kann die Stickoxid-Konzentration von 1100 mg/Nm³ auf 600 mg/Nm³ (bezogen auf 8 % Rest $O_2$) reduziert werden. Die Schadstoffkonzentrationen werden bezogen auf 8 % Rest $O_2$ angegeben, da sich die absoluten Werte durch das Eindringen von Falschluft in den Abgasstrom verändern. Direkt nach dem Brennraum liegt die Sauerstoff-Konzentration typischerweise bei etwa 1%, welche durch das Eindringen von Falschluft bis nach dem Filter auf etwa 5% steigt. Zur Vergleichbarkeit wird rein rechnerisch die Abgasmenge erhöht und die Abgaswerte werden auf einen Volumenstrom von 8 % bezogen. Die Umrechnung erfolgt für gemessene 1 % Sauerstoff nach dem Brennraum durch:

$$\frac{(20{,}9\% - 8\%)}{(20{,}9\% - 1\%)} \times gemessene\ Emission$$

Die oben beschriebenen Ausführungsbeispiele beziehen sich auf eine U-Flammenwanne. Alternativ kann die Erfindung analog in einer Querbrennerwanne verwendet werden.

Bezugszeichenliste:

| | |
|---|---|
| 1 | Brennraum |
| 1a | Stirnwand |
| 1b | gegenüber liegende Stirnwand |
| 2 | erster Brennerport (in Fig. 1 im Brennmodus) |
| 3 | zweiter Brennerport (in Fig. 1 im Abzugsmodus) |
| 3a | Seitenwand des Kanals des zweiten Brennerports 3 |
| 4 | Brennstoff |
| 5 | Oxidant |
| 6 | Verbrennungsabgas |
| 7 | Impulsgas |
| 8 | erste Regenerativkammer |
| 9 | zweite Regenerativkammer |
| 10 | keramische Gitterung der ersten Regenerativkammer |
| 11 | keramische Gitterung der zweiten Regenerativkammer |
| 12 | Auslass |
| 13 | Feeder |
| 20 | Brennerdüse |
| 21 | Mantelrohr |
| 22 | Kernrohr |
| 23 | Ringspalt |
| 24 | erstes Ventil |
| 25 | erste Einrichtung zur Volumenmessung |
| 26 | zweites Ventil |
| 27 | zweite Einrichtung zur Volumenmessung |
| 28 | Rückschlagventil |

29    drittes Ventil
30    dritte Einrichtung zur Volumenmessung
31    weiteres Rückschlagventil
32    Brennstoffzufuhr
33    Impulsgaszufuhr
34    Messkurve Stickoxid
35    Messkurve Sauerstoffkonzentration
36    Startzeitpunkt Impulsgaszufuhr
37    Zuführöffnung

**Patentansprüche**

1.  Verfahren zum Betreiben einer Glasschmelzanlage mit einem Brennraum (1), in dem die Verbrennung eines Brennstoffs (4) mit einem Oxidant (5) stattfindet, wobei der Brennraum (1) mit mindestens zwei Brennerports (2, 3) verbunden ist, welche in einer Stirnwand (1a) oder in einer Seitenwand des Brennraums angeordnet sind, wobei jeder Brennerport mindestens eine Brennerdüse (20) zur Zuführung des Brennstoffs (4) sowie einen Kanal zur Zuführung des Oxidant (5) und zur Abführung von bei der Verbrennung entstehendem Verbrennungsabgas aufweist, wobei jeder Brennerport (2,3) im Wechsel in einem Brennmodus und in einem Abzugsmodus betrieben wird, wobei im Brennmodus dem Brennraum (1) durch die mindestens eine Brennerdüse (20) des jeweiligen Brennerports (2) der Brennstoff (4) und durch den Kanal des jeweiligen Brennerports (2) der Oxidant (5) zugeführt werden, wobei im Abzugsmodus das Verbrennungsabgas (6) durch den Kanal des jeweiligen Brennerports (3) abgeführt wird, **dadurch gekennzeichnet, dass** dem Brennraum (1) durch mindestens eine Brennerdüse (20) oder durch mindestens eine Brennerdüse (20) und mindestens eine von der Brennerdüse (20) separate Zuführöffnung (37) des im Abzugsmodus betriebenen Brennerports (3) ein Impulsgas (7) derart entgegen der Strömungsrichtung des Verbrennungsabgases (6) zugeführt wird, dass das abströmende Verbrennungsabgas (6) in dem Brennraum (1) vor und/oder in dem Kanal des im Abzugsmodus betriebenen Brennerports (3) gestaut wird, wobei die mindestens eine Zuführöffnung (37) in der Stirnwand (1a) und/oder der Seitenwand (3a) neben dem und/oder in dem im Abzugsmodus betriebenen Brennerport (3) angeordnet ist, wobei der Impuls des durch die Brennerdüse und gegebenenfalls durch die Zuführöffnung zugeführten Impulsgases im Bereich von 1 kg*m/s$^2$ bis 30 kg*m/s$^2$ liegt und die Eintrittsgeschwindigkeit des Impulsgases, das mittels der mindestens einen Brennerdüse zugeführt wird, 50 m/s bis 200 m/s beträgt.

2.  Verfahren nach Anspruch 1, **dadurch gekennzeichnet, dass** das Impulsgas (7) durch die mindestens eine Brennerdüse (20) des im Abzugsmodus betriebenen Brennerports (3) und gegebenenfalls durch die eine von der Brennerdüse (20) separate Zuführöffnung (37) während eines Zeitraums zugeführt wird, in dem in dem in dem Brennmodus betriebenen Brennerport (2) Brennstoff zugeführt wird.

3.  Verfahren nach einem der vorhergehenden Ansprüche, **dadurch gekennzeichnet, dass** die mindestens eine Brennerdüse (20) im Brennmodus zum Zuführen des Brennstoffs (4) mit einer größeren Querschnittsfläche betrieben wird als im Abzugsmodus zum Zuführen des Impulsgases (7).

4.  Verfahren nach einem der vorhergehenden Ansprüche, **dadurch gekennzeichnet, dass** die mindestens zwei Brennerports (2, 3) jeweils mindestens zwei Brennerdüsen (20) aufweisen und im Brennmodus eine innen liegende Brennerdüse (20) des Brennerports (2) kein Brennstoff (4) abgibt, und im Abzugsmodus durch alle Brennerdüsen (20) des Brennerports (3) Impulsgas (7) abgegeben wird.

5.  Verfahren nach einem der vorhergehenden Ansprüche, **dadurch gekennzeichnet, dass** das Impulsgas (7) der jeweiligen Brennerdüse (20) und gegebenenfalls der jeweiligen Zuführöffnung (37) mit einem Vordruck von 100 kPa bis 1000 kPa, bevorzugt von 100 kPa bis 500 kPa, besonders bevorzugt von 400 kPa bis 500 kPa zugeführt wird.

6.  Verfahren nach einem der vorhergehenden Ansprüche, **dadurch gekennzeichnet, dass** das zugeführte Volumen des Impulsgases (7) 30 % bis 60 %, bevorzugt 40 % bis 55 %, besonders bevorzugt 48 % bis 52 % des zugeführten Volumens des Brennstoffs (4) beträgt.

7.  Verfahren nach einem der vorhergehenden Ansprüche, **dadurch gekennzeichnet, dass** der Impuls des zugeführten Impulsgases im Bereich von 2 kg*m/s$^2$ bis 20 kg*m/s$^2$ liegt.

8.  Verfahren nach einem der vorhergehenden Ansprüche, **dadurch gekennzeichnet, dass** der Volumenstrom des durch die Brennerdüse und gegebenenfalls durch die Zuführöffnung zugeführten Impulsgases abhängig von einer im Verbrennungsabgas gemessenen Stickoxid-Konzentration geregelt wird.

9. Verfahren nach einem der vorhergehenden Ansprüche, **dadurch gekennzeichnet, dass** die Zusammensetzung des Impulsgases mindestens 70 Vol.% Stickstoff, einen weiteren Anteil an Sauerstoff und einen geringen Anteil weiterer Komponenten aufweist, oder das Impulsgas aus technisch reinem Stickstoff besteht.

**Claims**

1. A method for operating a glass melting unit having a combustion chamber (1), in which the combustion of a fuel (4) with an oxidant (5) takes place, wherein the combustion chamber (1) is connected to at least two burner ports (2, 3), which are arranged in an end wall (1a) or in a side wall of the combustion chamber, wherein each burner port has at least one burner jet (20) for supplying the fuel (4) and a channel for supplying the oxidant (5) and for discharging exhaust gas generated during combustion, wherein each burner port (2, 3) is operated alternatingly in a combustion mode and in an exhaust mode, wherein the combustion chamber (1) is supplied with the fuel (4) via the at least one burner jet (20) of the relevant burner port (2) and with the oxidant (5) via the channel of the relevant burner port (2) in the combustion mode, wherein the exhaust gas (6) is discharged via the channel of the relevant burner port (3) in the exhaust mode, **characterized in that** an impulse gas (7) is supplied by at least one burner jet (20) or by at least one burner jet (20) and at least one feed opening (37) separate from the burner jet (20) of the burner port (3) operated in the exhaust mode to the combustion chamber (1) against the flow direction of the exhaust gas (6) in such a way that the outflowing exhaust gas (6) accumulates in the combustion chamber (1) before and/or in the channel of the burner port (3) operated in the exhaust mode, wherein the at least one feed opening (37) is arranged in the end wall (1a) and/or in the side wall (3a) next to and/or in the burner port (3) operated in the exhaust mode, wherein the impulse of the impulse gas supplied by the burner jet and optionally by the feed opening is in the range of 1 kg*m/s$^2$ to 30 kg*m/s$^2$ and the inflow velocity of the impulse gas, which is supplied by means of the at least one burner jet, is 50 m/s to 200 m/s.

2. The method according to Claim 1, **characterized in that** the impulse gas (7) is supplied by the at least one burner jet (20) of the burner port (3) operated in the exhaust mode and optionally by the feed opening (37) separate from the burner jet (20) during a time interval during which the burner port (2) operated in the combustion mode is being supplied with fuel.

3. The method according to any one of the preceding claims, **characterized in that** the at least one burner jet (20) is operated with a greater cross-sectional area in the combustion mode for supplying the fuel (4) than in the exhaust mode for supplying the impulse gas (7).

4. The method according to any one of the preceding claims, **characterized in that** the at least two burner ports (2, 3) each have at least two burner jets (20) and that an inner burner jet (20) of the burner port (2) does not deliver any fuel (4) in the combustion mode and that impulse gas (7) is delivered by all burner jets (20) of the burner port (3) in the exhaust mode.

5. The method according to any one of the preceding claims, **characterized in that** the impulse gas (7) of the relevant burner jet (20) and optionally of the relevant feed opening (37) is supplied with an inlet pressure of 100 kPa to 1000 kPa, preferably of 100 kPa to 500 kPa, particularly preferably of 400 kPa to 500 kPa.

6. The method according to any one of the preceding claims, **characterized in that** the volume of impulse gas (7) supplied is 30% to 60%, preferably 40% to 55%, particularly preferably 48% to 52% of the volume of fuel (4) supplied.

7. The method according to any one of the preceding claims, **characterized in that** the impulse of the impulse gas supplied is in the range of 2 kg*m/s$^2$ to 20 kg*m/s$^2$.

8. The method according to any one of the preceding claims, **characterized in that** the volumetric flow rate of the impulse gas supplied by the burner jet and optionally by the feed opening is regulated in accordance with a concentration of nitrous oxide measured in the exhaust gas.

9. The method according to any one of the preceding claims, **characterized in that** the composition of the impulse gas comprises at least 70 vol.% nitrogen, a further percentage of oxygen, and a small percentage of further components, or that the impulse gas is composed of technically pure nitrogen.

**Revendications**

1. Procédé de fonctionnement d'une installation de fusion de verre avec un compartiment de combustion (1) dans lequel la combustion d'un combustible (4) a lieu avec un oxydant (5), sachant que le compartiment de combustion (1) est relié à au moins deux orifices de brûleur (2, 3) lesquels sont disposées dans une paroi frontale (1a) ou dans une paroi latérale du compartiment de combustion,
sachant que chaque orifice de brûleur comporte au moins une buse de brûleur (20) pour l'acheminement du combustible (4) ainsi qu'un conduit pour l'acheminement de l'oxydant (5) et pour l'évacuation des gaz d'échappement de combustion se produisant lors de la combustion,
sachant que chaque orifice de brûleur (2, 3) est utilisé alternativement en fonctionnement dans un mode de combustion et dans un mode de tirage,
sachant qu'en mode de combustion, le combustible (4) est acheminé au compartiment de combustion (1) par au moins une buse de combustion (20) de l'orifice de brûleur (2) respectif et l'oxydant (5) est acheminé par le conduit de l'orifice de brûleur (2) respectif,
sachant qu'en mode d'évacuation, les gaz d'échappement de combustion (6) sont évacués par le conduit de l'orifice de brûleur (3) respectif,
**caractérisé en ce qu'**un gaz d'impulsion (7) est acheminé au compartiment de combustion (1) par au moins une buse de brûleur (20) ou par au moins une buse de bruleur (20) et au moins une ouverture d'arrivée (37) séparée de la buse de brûleur (20) de l'orifice de brûleur (3) fonctionnant en mode d'évacuation dans le sens contraire à la direction d'écoulement des gaz d'échappement de combustion (6) de telle manière que les gaz d'échappement de combustion (6) s'échappant sont accumulés dans le compartiment de combustion (1) avant et/ou dans le conduit de l'orifice de brûleur (3) fonctionnant en mode de tirage,
sachant qu'au moins une ouverture d'arrivée (37) est disposée dans la paroi frontale (1a) et/ou la paroi latérale (3a) près de l'orifice de brûleur (3) fonctionnant en mode de tirage, sachant que l'impulsion du gaz d'impulsion acheminé par la buse de brûleur et le cas échéant par l'ouverture d'arrivée se situe dans une plage de 1 kg*m/s² à 30 kg*m/s² et la vitesse d'entrée du gaz d'impulsion qui est acheminé au moyen d'une buse de brûleur, se situe de 50 m/s à 200 m/s.

2. Procédé selon la revendication 1, **caractérisé en ce que** le gaz d'impulsion (7) est acheminé par au moins une buse de brûleur (20) de l'orifice de brûleur (3) fonctionnant en mode de tirage et le cas échéant par une ouverture d'arrivée (37) séparée de la buse de brûleur (20) pendant une période de temps dans laquelle du combustible est acheminé à l'orifice de brûleur (2) fonctionnant en mode de combustion.

3. Procédé selon l'une quelconque des revendications précédentes, **caractérisé en ce qu'**au moins une buse de brûleur (20) est actionnée en mode de combustion pour acheminer du combustible (4) avec une surface de section plus grande qu'en mode de tirage pour acheminer le gaz d'impulsion (7).

4. Procédé selon l'une quelconque des revendications précédentes, **caractérisé en ce qu'**au moins deux orifices de brûleur (2, 3) comportent respectivement au moins deux buses de brûleur (20) et qu'en mode de combustion, une buse de brûleur (20) située à l'intérieur de l'orifice de brûleur (2) ne diffuse aucun combustible (4) et qu'en mode de tirage, du gaz d'impulsion (7) est diffusé à travers toutes les buses de brûleur (20) de l'orifice de brûleur (3).

5. Procédé selon l'une quelconque des revendications précédentes, **caractérisé en ce que** le gaz d'impulsion (7) de la buse de brûleur (20) respective et le cas échéant de l'ouverture d'arrivée respective (37) est acheminé avec une pression préalable de 100 kPa à 1000 kPa, de préférence de 100 kPa à 500 kPa, en particulier de préférence de 400 kPa à 500 kPa.

6. Procédé selon l'une quelconque des revendications précédentes, **caractérisé en ce que** le volume acheminé de gaz d'impulsion (7) représente 30% à 60%, de préférence 40% à 55%, de préférence en particulier 48% à 52% du volume acheminé de combustible (4).

7. Procédé selon l'une quelconque des revendications précédentes, **caractérisé en ce que** l'impulsion du gaz d'impulsion acheminé se situe dans la plage de 2 kg*m/s² à 20 kg*m/s².

**8.** Procédé selon l'une quelconque des revendications précédentes, **caractérisé en ce que** le flux volumique du gaz d'impulsion acheminé par la buse de brûleur et le cas échéant par l'ouverture d'arrivée est régulé en fonction d'une concentration d'oxyde d'azote mesurée dans les gaz d'échappement de combustion.

**9.** Procédé selon l'une quelconque des revendications précédentes, **caractérisé en ce que** la composition du gaz d'impulsion comporte au moins 70%vol. d'azote, une autre partie en oxygène et une faible partie d'autres composants ou bien le gaz d'impulsion est composé d'azote techniquement pur.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5203859 A
- EP 0599548 A1
- US 20060057517 A1
- US 5417731 A
- US 5993203 A
- US 5893940 A
- EP 2332889 A1
- EP 1326049 A1
- US 4347072 A
- JP S55154327 A
- WO 2016193608 A1